# EUROPÄISCHE PATENTSCHRIFT

(11) **EP 0 621 167 B1**
(45) Veröffentlichungstag und Bekanntmachung des Hinweises auf die Patenterteilung: **18.09.1996**
(21) Anmeldenummer: 93106357.2
(22) Anmeldetag: 20.04.1993
(51) Int. Cl.: B62B 9/08, F16H 25/18, G05G 7/02

(54) **Brems- bzw. Feststelleinrichtung für einen Kinderwagen o. dgl.**
Brake or locking device for baby carriage or the like
Dispositif de freinage ou de blocage pour voitures d'enfant ou analogues

(43) Veröffentlichungstag der Anmeldung: 26.10.1994
(73) Patentinhaber: Hofmann, Christa, D-96224 Burgkunstadt (DE)
(72) Erfinder:
(74) Vertreter: LOUIS, PÖHLAU, LOHRENTZ & SEGETH

(56) Entgegenhaltungen:
- CH-A- 412 495
- DE-C- 730 704
- GB-A- 161 288
- US-A- 2 360 874

## Beschreibung

Die Erfindung betrifft eine Brems- bzw. Feststelleinrichtung für einen Kinder- oder Puppenwagen, ein Dreirad, ein Kinderauto o.dgl., siehe z.B. DE.PS.730 704.

Insbes. für Kinder- oder Puppenwagen sind Brems- bzw. Feststelleinrichtungen bekannt, die einen um eine Schwenkachse schwenkbaren Brems- bzw. Feststellhebel aufweisen, der in der Brems- bzw. Feststellposition eng am Reifen eines Rades des Kinder- oder Puppenwagens anliegt. Der besagte Hebel ist am Kinder- oder Puppenwagen frei zugänglich vorgesehen, was eine Verletzungsgefahr bedingt. Außerdem ergibt sich durch die Brems- bzw. Feststelleinrichtung eine Abnutzung des Reifens des Rades.

Der Erfindung liegt die Aufgabe zugrunde, eine Brems- bzw. eine Feststelleinrichtung der eingangs genannten Art zu schaffen, bei welcher eine Verletzungsgefahr ausgeschlossen ist, und die einen hohen Bedienungskomfort aufweist.

Diese Aufgabe wird erfindungsgemäß dadurch gelöst, daß aus einem Gehäuse mindestens eine Bremsstange in einer ersten Raumrichtung vorsteht, daß das Gehäuse zwei voneinander beabstandete Betätigungsorgane aufweist, die in einer zur ersten Raumrichtung senkrechten zweiten Raumrichtung orientiert sind, daß die beiden Betätigungsorgane miteinander mittels eines Verbindungshebels verbunden sind, der um eine in seinem mittleren Bereich vorgesehene Schwenkachse im Gehäuse schwenk- bzw. kippbeweglich gelagert ist, die in einer zur ersten und zweiten Raumrichtung senkrechten dritten Raumrichtung orientiert ist, und daß das erste Betätigungsorgan zum Verstellen der mindestens einen Bremsstange in die Brems- bzw. Arretierstellung bei gleichzeitiger mechanischer Spannung eines zwischen dem Gehäuse und der mindestens einen Bremsstange vorgesehenen Federelements und das zweite Betätigungsorgan zum Lösen der in der Brems- bzw. Arretierstellung gegebenen Fixierung zwischen dem ersten Betätigungsorgan und der mindestens einen Bremsstange vorgesehen ist.

Die erfindungsgemäße Brems- bzw. Feststelleinrichtung bildet mittels des Gehäuses, aus dem die mindestens eine Bremsstange vorsteht, eine bauliche Einheit, die gegebenenfalls auch nachträglich an einem Kinder- oder Puppenwagen, einem Dreirad, einem Kinderauto, einem Kindertraktor o.dgl. anbringbar ist. Ein weiterer Vorteil der erfindungsgemäßen Einrichtung besteht darin, daß eine mögliche Verletzungsgefahr eliminiert ist. Durch die beiden voneinander beabstandeten und miteinander mittels des Verbindungshebels wirkverbundenen Betätigungsorgane ist eine Fehlbedienung quasi ausgeschlossen bzw. es ergibt sich ein guter Bedienungskomfort der erfindungsgemäßen Brems- bzw. Feststelleinrichtung, was einen weiteren Vorteil der Einrichtung darstellt.

Als besonders vorteilhaft hat es sich erwiesen,wenn bei der erfindungsgemäßen Einrichtung aus dem Gehäuse zwei Bremsstangen herausstehen, die axial fluchtend in entgegengesetzte Richtungen weisen. Durch eine solche Ausbildung der Einrichtung ist es möglich, bei einer entsprechenden Betätigung des jeweils aus dem Gehäuse herausstehenden Betätigungsorgans die beiden sich seitlich gegenüberliegenden Räder der entsprechenden Radachse eines Kinder- oder Puppenwagens o.dgl. gleichzeitig abzubremsen bzw. festzustellen, oder die Fixierung zu lösen. Dadurch, daß mit einer Einrichtung der zuletzt genannten Art nicht nur ein Rad sondern die beiden Räder einer Radachse des Wagens o.dgl. feststellbar sind, ergibt sich im Vergleich zu bekannten Brems- bzw. Feststelleinrichtungen mit einem Hebel eine erheblich verbesserte Brems- bzw. Arretierwirkung, was unter dem Sicherheitsaspekt besonders vorteilhaft ist.

Zweckmäßig ist es, wenn die/jede Bremsstange an ihrem im Gehäuse befindlichen Innenabschnitt ein Schieberorgan aufweist, das mit einer Keilfläche und mit einer Rastausnehmung ausgebildet ist, und wenn das erste Betätigungsorgan mit einem Keil mit in die entsprechenden Rastausnehmungen einrastenden Rastnasen versehen ist. Das zur entsprechenden Bremsstange zugehörige Schieberorgan weist zweckmäßigerweise ein von der Kreisform abweichendes Querschnittsprofil auf, um eine Verdrehung des entsprechenden Schieberorgans im Gehäuse zu verhindern, so daß das/jedes Schieberorgan mit seiner Keilfläche und mit seiner an die Keilfläche anschließenden Rastausnehmung in bezug auf das erste Betätigungsorgan bzw. dessen Keil passend ausgerichtet ist. Hierdurch werden unerwünschte Verkippungen bzw. Verschwenkungen zwischen Schieberorgan und erstem Betätigungsorgan in einfacher Weise verhindert. Gleichzeitig ergibt sich hierdurch eine gute lineare Führung des/jedes Schieberorgans in der durch die zugehörige Bremsstange festgelegten ersten Raumrichtung.

Das Schiebeorgan und die zugehörige Bremsstange sind zweckmäßigerweise miteinander mittels eines Federelementes federnd nachgiebig verbunden. Hierdurch ist es möglich, das Schiebeorgan auch dann im Gehäuse mittels des ersten Betätigungsorgans linear zu bewegen, wenn die entsprechende Bremsstange z.B. an einer Speiche eines Rades unbeweglich anliegt. Es ist dann das besagte Federelement gespannt und bei einer geringfügigen Bewegung des Rades wieder entspannt, wobei die Bremsstange neben der Speiche zu liegen kommt und eine Radarretierung bewirken kann.

Das/jedes Federelement kann eine Schraubendruckfeder sein, durch welche sich die entsprechende Bremsstange hindurcherstrecken kann. Durch eine solche Ausbildung ergibt sich eine raumsparende Anordnung des Federelements und der weitere, nicht zu vernachlässigende Vorteil, daß die Einrichtung auch bei einem möglichen Bruch der entsprechenden Schraubendruckfeder zumindest vorübergehend funktionstüchtig bleibt.

Damit bei der erfindungsgemäßen Einrichtung sowohl in der normalen Ruhe- d.h. Freigabestellung als auch in der Brems- bzw. Arretierstellung jeweils nur eines der beiden Betätigungsorgane aus dem Gehäuse der Einrichtung vorsteht, so daß nur genau definiert ein Umschalten von der einen in die andere Stellung möglich ist, hat es sich als vorteilhaft erwiesen, wenn der Verbindungshebel abgewinkelt und an seinen beiden Endabschnitten mit Langlöchern ausgebildet ist, und wenn sich durch jedes der beiden geeignet dimensionierten Betätigungsorgane und durch das jeweils zugehörige Langloch im Verbindungshebel ein Befestigungsstift hindurcherstreckt. Die beiden Betätigungsorgane werden hierbei in der zweiten Raumrichtung durch Öffnungen im Gehäuse linear beweglich geführt, wobei die an den beiden Endabschnitten des Verbindungshebels ausgebildeten Langlöcher dazu vorgesehen sind, daß die besagte lineare Beweglichkeit der Betätigungsorgane in der zweiten Raumrichtung durch die eine Längenänderung in der ersten Raumrichtung bewirkende Schwenkbewegung des Verbindungshebels nicht be- bzw. verhindert wird.

Die/jede Bremsstange kann an ihrem aus dem Gehäuse vorstehenden freien Endabschnitt mit einem Bremselement versehen sein. Bei diesem Bremselement kann es sich um einen Bremsklotz oder um eine Saugkappe handeln. Eine Saugkappe kann insbes. dann zur Anwendung gelangen, wenn das zugehörige Rad des Kinder- oder Puppenwagens o.dgl. mit einer glattflächigen Felgenscheibe ausgebildet ist, an welcher sich die besagte Saugkappe festsaugen kann, um das entsprechende Rad zu blockieren. Ist das entsprechende Rad mit einer Speichenfelge ausgebildet, so kann die Bremsstange als einfache Stange auch ohne Bremselement ausgebildet sein.

Weitere Einzelheiten, Merkmale und Vorteile ergeben sich aus der nachfolgenden Beschreibung eines in der Zeichnung dargestellten Ausführungsbeispieles der erfindungsgemäßen Brems- bzw. Feststelleinrichtung für einen Kinder- oder Puppenwagen o.dgl. Es zeigen:
- Fig. 1: teilweise aufgeschnitten eine Ansicht der Brems- bzw. Feststelleinrichtung mit zwei Bremsstangen, die nur abschnittweise gezeichnet sind,
- Fig. 2: einen Vorderabschnitt einer Bremsstange mit einem Bremselement in Gestalt einer Saugkappe,
- Fig. 3: ein abschnittweise gezeichnetes Bremselement, das einfach stiftförmig ausgebildet ist, und
- Fig. 4: einen Ausschnitt der Bremseinrichtung.

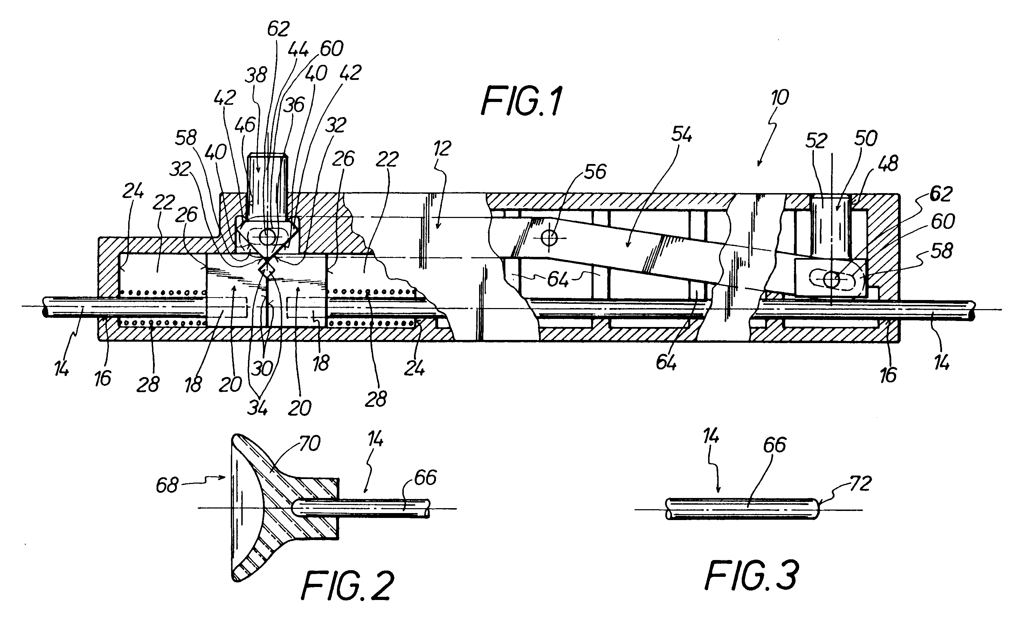

Fig. 1 zeigt mehrfach aufgeschnitten eine Brems- bzw. Feststelleinrichtung 10 mit einem Gehäuse 12, aus dem zwei Bremsstangen 14 axial fluchtend in entgegengesetzte Richtungen herausstehen. Durch die beiden Bremsstangen 14 wird eine erste in der Zeichnungsebene der Fig. 1 liegende Raumrichtung festgelegt. Das Gehäuse 12 ist mit Öffnungen 16 ausgebildet, durch die sich die beiden Bremsstangen 14 axial beweglich geführt hindurcherstrecken.

An dem im Inneren des Gehäuses 12 befindlichen Endabschnitt 18 jeder der beiden Bremsstangen 14 ist ein Schieberorgan 20 befestigt. Jedes Schieberorgan 20 weist einen von der Kreisform abweichenden Querschnitt auf und ist in einem entsprechend querschnittsprofilierten Zentralraum 22 im Gehäuse 12 in der ersten Raumrichtung linear beweglich geführt. Zwischen der den entsprechenden Zentralraum 22 auf der einen Seite begrenzenden Innenwand 24 des Gehäuses 12 und der der besagten Innenwand 24 zugewandten Rückenwand 26 des entsprechenden Schieberorgans 20 ist ein Federelement 28 vorgesehen, bei dem es sich bspw. um eine Schraubendruckfeder handelt, durch welche sich die entsprechende Bremsstange 14 hindurcherstreckt. Die beiden Federelemente 28 sind derartig dimensioniert, daß sie die beiden Schieberorgane 20 in der in Fig. 1 gezeichneten Ruhestellung der Brems- bzw. Feststelleinrichtung 10 mit ihren Stirnflächen 30 mit einer definierten Kraft gegeneinanderzwängen. Aus demselben Grunde kann auch zwischen den beiden Schieberorganen 20 eine Feder vorgesehen sein.

Jedes der beiden Schieberorgane 20 ist an seiner Stirnfläche 30 mit einer Keilfläche 32 und mit einer an die Keilfläche anschließenden Rastausnehmung 34 ausgebildet. Die beiden Keilflächen 32 bilden in der in Fig. 1 gezeichneten Ruhe- bzw. Freigabestellung der Brems- bzw. Feststelleinrichtung 10 eine V-förmige Rinne, die zur Zeichnungsebene der Fig. 1 senkrecht orientiert ist. In diese V-förmige Rinne steht ein Keil 36 eines ersten Betätigungsorganes 38 hinein, der mit Keil- bzw. Schrägflächen 40 ausgebildet ist. An die besagten Keil- bzw. Schrägflächen 40 schließen sich Rastnasen 42 an, die im Profil an das Profil der Rastausnehmungen 34 in den Schieberorganen 20 angepaßt sind. Das erste Betätigungsorgan 38 weist außerdem einen Betätigungs- bzw. Druckknopf 44 auf, der in einer Öffnung 46 im Gehäuse 12 linear beweglich geführt ist. Durch die Öffnung 46 bzw. den Betätigungs- bzw. Druckknopf 44 wird eine zur ersten Raumrichtung senkrechte zweite Raumrichtung bestimmt, die wie die erste Raumrichtung in der Zeichnungsebene der Fig. 1 liegt.

Das Gehäuse 12 der Brems- bzw. Feststelleinrichtung 10 ist mit einer zweiten Öffnung 48 ausgebildet, in welcher ein zweites Betätigungsorgan 50 mit seinem Betätigungs- bzw.

Druckknopf 52 linear beweglich geführt ist. Die beiden Betätigungsorgane 38 und 50 sind zueinander parallel orientiert und miteinander mittels eines abgewinkelten Verbindungshebels 54 verbunden, der im Gehäuse 12 der Brems- bzw. Feststelleinrichtung 10 um eine in einem mittleren Bereich des Verbindungshebels 54 vorgesehenen Schwenkachse 56 schwenk- bzw. kippbeweglich angeordnet ist. Die Schwenkachse 56 ist in einer zur ersten und zur zweiten Raumrichtung senkrechten dritten Raumrichtung orientiert, die zur Zeichnungsebene der Fig. 1 senkrecht steht. Der Verbindungshebel 54 ist derartig abgewinkelt, daß jeweils nur eines der beiden Betätigungsorgane 38 bzw. 50 aus dem Gehäuse 12 vorsteht, während das jeweils andere Betätigungsorgan 50 bzw. 38 mit dem Gehäuse 12 fluchtet, d.h. nicht aus diesem vorsteht. Eine gleichzeitige Bedienung oder eine Fehlbedienung der Bremseinrichtung 10 ist auf diese Weise ausgeschlossen.

Um die lineare Beweglichkeit der Betätigungsorgane 38 und 50 und gleichzeitig die Schwenkbewegung des abgewinkelten Verbindungshebels 54 nicht zu beeinträchtigen, ist der Verbindungshebel 54 an seinen voneinander abgewandten Endabschnitten 58 mit Langlöchern 60 ausgebildet. Durch das entsprechende Langloch 60 und das zugehörige Befestigungsorgan 38 bzw. 50 erstreckt sich ein Befestigungsstift 62 hindurch, wodurch das jeweilige Betätigungsorgan 38 bzw. 50 mit dem zugehörigen Endabschnitt 58 des abgewinkelten Verbindungshebels 54 schwenkbeweglich verbunden ist.

Zur mechanischen Versteifung des Gehäuses 12 kann dieses innenseitig mit Versteifungsrippen 64 ausgebildet sein.

Fig. 2 zeigt einen freien Endabschnitt 66 einer Bremsstange 14, an welchem ein Bremselement 68 vorgesehen ist. Das besagte Bremselement 68 ist als Saugkappe 70 ausgebildet. Demgegenüber zeigt Fig. 3 ein Ausführungsbeispiel eines freien Endabschnittes 66 einer Bremsstange 14, wobei das stirnseitige Ende 72 einfach abgerundet ist. Bremsstangen 14 mit Bremselementen 68 in Gestalt von Saugkappen 70 kommen insbes. bei Wagen mit Rädern zur Anwendung, bei welchen die Felgen mit glattflächigen Scheiben ausgebildet sind. Bremsstangen 14 mit freien Endabschnitten 66 gemäß Fig. 3 kommen bspw. bei Kinder- oder Puppenwagen o.dgl. zum Einsatz, bei welchen die Räder mit Felgen versehen sind, die mit Speichen ausgebildet sind.

Um die in Fig. 1 gezeichnete Ausführungsform der Einrichtung 10 von der in dieser Zeichnungsfigur gezeichneten Ruhe- bzw. Entarretierstellung in die Brems- bzw. Feststellposition zu verstellen, wird auf das erste Betätigungsorgan 38 gedrückt. Hierbei bewirken die Keil- bzw. Schrägflächen 40 des Keiles 36 des ersten Betätigungsorganes 38 eine Auseinanderbewegung der beiden Schieberorgane 20. Gleichzeitig werden die beiden Bremsstangen 14 in der ersten Raumrichtung auseinander und gegen (nicht gezeichnete) Räder bewegt. Hierbei werden die beiden Federeinrichtungen 28 mechanisch gespannt. Wird das erste Betätigungsorgan 38 in der zweiten Raumrichtung so weit in das Gehäuse 12 hineingedrückt, bis der Betätigungs- bzw. Druckknopf 44 mit dem Gehäuse 12 fluchtend abschließt, so rasten die beiden Rastnasen 42 in die Rastausnehmungen 34 in den Schieberorganen 20 ein. Hierdurch ergibt sich eine Arretierung des ersten Betätigungsorganes 38 zwischen den beiden Schieberorganen 20, wobei gleichzeitig mit Hilfe des abgewinkelten Verbindungshebels 54 das zweite Betätigungsorgan 50 mit seinem Betätigungs- bzw. Druckknopf 52 aus dem Gehäuse 12 entsprechend herausbewegt und in dieser herausbewegten Position fixiert wird. Um die auf diese Weise erreichte Brems- bzw. Feststellposition der Einrichtung 10 wieder in die Ruhe- bzw. Entarretierstellung umzustellen, ist es dann erforderlich, gegen den zweiten Betätigungs- bzw. Druckknopf 52 zu drücken, wodurch die beiden Rastnasen 42 wieder aus den Rastausnehmungen 34 herausbewegt werden, was durch die Schräg- bzw. Keilflächen problemlos möglich ist. Sobald die Rastnase 42 aus den Rastausnehmungen 34 herausbewegt worden sind, können sich die Federeinrichtungen 28 wieder mechanisch entspannen. Dabei werden die Keilflächen 32 der Schieberorgane 20 an den Keil- bzw. Schrägflächen 40 des ersten Betätigungsorganes 38 entlangbewegt. Dabei wird das erste Betätigungsorgan 38 in der zweiten Raumrichtung aus der Öffnung 46 im Gehäuse 12 wieder herausbewegt.

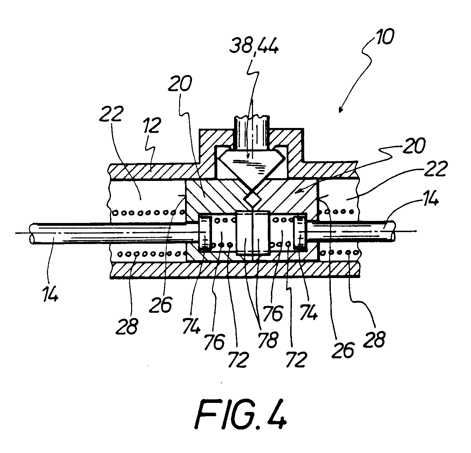

Fig. 4 zeigt längsgeschnitten einen Ausschnitt einer bevorzugten Ausbildung der Brems- bzw. Feststelleinrichtung 10, wobei das Gehäuse 12, das erste Betätigungsorgan 38 bzw. dessen Druckknopf 44 und die beiden Bremsstangen 14 nur abschnittweise gezeichnet sind. Gleiche Einzelheiten sind in den Fig. 1 und 4 jeweils mit denselben Bezugsziffern bezeichnet. Der Endabschnitt 18 jeder Bremsstange 14 ist mit einem Kopf 74 ausgebildet, der einen Anschlag zur Bewegungsbegrenzung bildet. Jedes der beiden Schieberorgane ist mit einem Hohlraum 76 ausgebildet, in dem ein Federelement 72 angeordnet ist, das zwischen dem zugehörigen Kopf 74 und einem Stopfenelement 78 eingezwängt ist. Das Stopfenelement 78 kann in das zugehörige Schieberorgan 20 eingeschraubt, eingeklebt oder beliebig anders befestigt sein. Durch eine solche Ausbildung ist eine federnd nachgiebige Beweglichkeit zwischen der Bremsstange 14 und dem zugehörigen Schieberorgan 20 gegeben, was insbesondere dann zweckmäßig ist, wenn die Bremsstange 14 nicht mit einer nachgiebigen Saugkappe 68 (s. Fig. 2) versehen ist.

## Patentansprüche

1. Brems- bzw. Feststelleinrichtung für einen Kinder- oder Puppenwagen, ein Dreirad, ein Kinderauto o.dgl.,
**dadurch gekennzeichnet,**
daß aus einem Gehäuse (12) mindestens eine Bremsstange (14) in einer ersten Raumrichtung vorsteht, daß das Gehäuse (12) zwei voneinander beabstandete Betätigungsorgane (38, 50) aufweist, die in einer zur ersten Raumrichtung senkrechten zweiten Raumrichtung orientiert sind, daß die beiden Betätigungsorgane (38, 50) miteinander mittels eines Verbindungshebels (54) verbunden sind, der um eine in seinem mittleren Bereich vorgesehene Schwenkachse (56) im Gehäuse (12) schwenk- bzw. kippbeweglich gelagert ist, die in einer zur ersten und zur zweiten Raumrichtung senkrechten dritten Raumrichtung orientiert ist, und daß das erste Betätigungsorgan (38) zum Verstellen der mindestens einen Bremsstange (14) in die Brems- bzw. Arretierstellung bei gleichzeitiger mechanischer Spannung eines zwischen dem Gehäuse (12) und der mindestens einen Bremsstange (14) vorgesehenen Federelementes (28) und das zweite Betätigungsorgan (50) zum Lösen der in der Brems- bzw. Arretierstellung gegebenen Fixierung zwischen dem ersten Betätigungsorgan (38) und der mindestens einen Bremsstange (14) vorgesehen ist.

2. Einrichtung nach Anspruch 1,
**dadurch gekennzeichnet,**
daß aus dem Gehäuse (12) zwei Bremsstangen (14) herausstehen, die axial fluchtend in entgegengesetzte Richtungen weisen.

3. Einrichtung nach Anspruch 1 oder 2,
**dadurch gekennzeichnet**,
daß die/jede Bremsstange (14) an ihrem im Gehäuse (12) befindlichen Innenendabschnitt (18) ein Schieberorgan (20) aufweist, das mit einer Keilfläche (32) und mit einer Rastausnehmung (34) ausgebildet ist, und daß das erste Betätigungsorgan (38) mit einem Keil (36) mit in die entsprechende Rastausnehmung (34) einrastenden Rastnasen (42) versehen ist.

4. Einrichtung nach Anspruch 3,
**dadurch gekennzeichnet,**
daß das Schieberorgan (20) und die zugehörige Bremsstange (14) miteinander mittels eines Federelements (72) federnd nachgiebig verbunden sind.

5. Einrichtung nach einem der vorhergehenden Ansprüche,
**dadurch gekennzeichnet,**
daß das/jedes Federelement (28) eine Schraubendruckfeder ist, durch welche sich die entsprechende Bremsstange (14) hindurcherstreckt.

6. Einrichtung nach Anspruch 5,
**dadurch gekennzeichnet,**
daß die/jede Schraubendruckfeder zwischen einer Innenwand (24) des Gehäuses (12) und dem entsprechenden Schieberorgan (20) angeordnet ist.

7. Einrichtung nach einem der vorhergehenden Ansprüche,
**dadurch gekennzeichnet**,
daß der Verbindungshebel (54) abgewinkelt und an seinen beiden Endabschnitten (58) mit Langlöchern (60) ausgebildet ist, und daß sich durch jedes der beiden Betätigungsorgane (38, 50) und durch das jeweils zugehörige Langloch (60) im Verbindungshebel (54) ein Befestigungsstift (62) hindurcherstreckt.

8. Einrichtung nach einem der vorhergehenden Ansprüche,
**dadurch gekennzeichnet,**
daß die/jede Bremsstange (14) an ihrem aus dem Gehäuse (12) vorstehenden freien Endabschnitt (66) mit einem Bremselement (68) versehen ist.

9. Einrichtung nach Anspruch 8,
**dadurch gekennzeichnet,**
daß das/jedes Bremselement (68) eine Saugkappe (70) ist.

## Claims

1. A brake device or a locking device for a child's or doll's pram, a tricycle, a child's car or the like,
characterized in that
at least one brake rod (14) projects from a casing (12) in a first spatial direction, that the casing (12) has two actuating elements (38, 50) interspaced from each other which are orientated in a second spatial direction perpendicular to the first spatial direction, that the two actuating elements (38, 50) are connected to each other by means of a connecting lever (54) which is mounted in the casing (12) for pivoting or tilting round a pivot pin (56) provided in its central zone, which pivot pin is orientated in a third spatial direction perpendicular to the first and to the second spatial direction, and that the first actuating element (38) is intended for setting at least one brake rod (14) into the braking or stopping position, with the simultaneous mechanical stressing of a spring element (28) provided between the casing (12) and at least one brake rod (14) and that the second actuating element (50) is intended for releasing the fixed connection provided in the braking or stopping position between the first actuating element (38) and at least one brake rod (14).

2. A device according to claim 1,
characterized in that
two brake rods (14) project from the casing (12) which, being axially aligned, point in opposite directions.

3. A device according to claim 1 or 2,
characterized in that
the/each brake rod (14) has at its inner end section (18) located in the casing (12) a slider element (20) which is designed with a wedge face (32) and with an engagement recess (34), and that the first actuating element (38) is provided with a wedge (36) with engagement projections (42) engaging in the corresponding engagement recess (34).

4. A device according to claim 3,
characterized in that
the slider element (20) and the associated brake rod (14) are connected to each other in an elastically sprung mode by means of a spring element (72).

5. A device according to one of the preceding claims,
characterized in that
the/each spring element (28) is a helical compression spring through which there extends the corresponding brake rod (14).

6. A device according to claim 5,
characterized in that
the/each helical compression spring is arranged between an internal wall (24) of the casing (12) and the corresponding slider element (20).

7. A device according to one of the preceding claims,
characterized in that
the connecting lever (54) has a bent shape and is designed at its two end sections (58) with slots (60) and that a securing pin (62) extends through each of the two actuating elements (38, 50) and through the respectively associated slot (60) in the connecting lever (54).

8. A device according to one of the preceding claims,
characterized in that
the/each brake rod (14) is provided at its free end section (66) projecting from the casing (12) with a brake element (68).

9. A device according to claim 8,
characterized in that
the/each brake element (68) is a suction cap (70).

## Revendications

1. Dispositif de blocage ou de freinage de voiture de poupée ou d'enfant, de tricycle, d'automobile pour enfant ou équivalent, caractérisé en ce qu'il comporte au moins une barre de freinage (14) dépassant d'un boîtier (12) suivant une première direction, ledit boîtier (12) comportant deux organes de commande (38, 50) à distance l'un de l'autre et orientés suivant une deuxième direction perpendiculaire à la première, lesdits organes de commande (38, 40) étant reliés au moyen d'un levier de liaison (54), monté articulé ou pivotant dans ledit boîtier (12) autour d'un axe de pivotement (56) situé dans sa partie centrale et orienté selon une troisième direction perpendiculaire aux deux précédentes, le premier organe de commande (38) étant destiné à l'établissement de la position de freinage ou d'arrêt de ladite barre de freinage (14), par une tension mécanique concommitante d'un élément de rappel (26) situé entre le boîtier (12) et la barre de freinage (14), le second organe de commande (50) étant destiné à se libérer de la position d'arrêt ou de freinage établie entre le premier organe de commande (38) et la barre de freinage (14).

2. Dispositif selon la revendication 1, caractérisé en ce que les barres de freinage (14) du boîtier (12) sont au nombre de deux et présentent un alignement axial dans des directions opposées.

3. Dispositif selon l'une des revendications 1 ou 2, caractérisé en ce que les / chaque barre(s) de freinage (14) présente(nt) un organe coulissant (20) au niveau de leur partie d'extrémité interne (18) se trouvant à l'intérieur du boîtier (12), chacun desdits organes (20) étant pourvu d'une surface de coin chanfreinée (32) et d'une encoche évidée (34), et en ce que le premier organe de commande (38) est doté d'une extrémité cunéiforme (36) avec des excroissances latérales en coin (42) destinées à s'adapter dans les évidements (34).

4. Dispositif selon la revendication 3, caractérisé en ce que l'organe coulissant (20) et les barres de freinage correspondantes (14) sont reliées simplement au moyen d'un élément de rappel (72).

5. Dispositif selon l'une quelconque des revendications précédentes, caractérisé en ce que le / chaque élément de rappel (28) est un ressort hélicoïdal de pression, au travers duquel la barre de freinage correspondante (14) est insérée.

6. Dispositif selon la revendication 5, caractérisé en ce que le / chaque ressort hélicoïdal de pression est placé entre une paroi interne (24) du boîtier (12) et l'organe coulissant (20) correspondant.

7. Dispositif selon l'une quelconque des revendications précédentes, caractérisé en ce que le lever de liaison (54) comporte un angle et est doté à ses deux extrémités (58) de trous oblongs (60), chacun des deux organes de commande (38, 50) et des deux trous oblongs correspondants (60) du levier de liaison (54) logeant une tige de solidarisation (62).

8. Dispositif selon l'une quelconque des revendications précédentes, caractérisé en ce que la / chaque barre de freinage (14) est équipée d'un élément de freinage (68) à son extrémité libre (66) dépassant du boîtier (12).

9. Dispositif selon la revendication 8, caractérisé en ce que chaque élément de freinage (68) est une ventouse (70).
